# EUROPEAN PATENT SPECIFICATION

(11) **EP 1 310 125 B1**
(45) Date of publication and mention of the grant of the patent: **19.08.2015**
(21) Application number: 01950202.0
(22) Date of filing: 20.07.2001
(51) Int. Cl.: G08B 21/02, H04W 4/22, H04W 76/00

(54) **ALARM ARRANGEMENT AT A MOBILE COMMUNICATION SYSTEM**
ALARMANORDNUNG IN EINEM MOBILKOMMUNIKATIONSSYSTEM
SYSTEME D'ALARME D'UN SYSTEME DE COMMUNICATION MOBILE

(30) Priority: 21.07.2000 SE 0002743
(43) Date of publication of application: 14.05.2003
(73) Proprietor: Multicom Security AB, 117 43 Stockholm (SE)
(72) Inventor: LÅNGSTRÖM, Mikael, S-903 52 Umea (SE)
(74) Representative: Glawe, Delfs, Moll
(86) International application number: PCT/SE2001/001656
(87) International publication number: WO 2002/009465

(56) References cited:
- EP-A2- 0 679 041
- WO-A1-00/19392
- WO-A1-98/57189
- US-A- 5 416 468
- US-A- 5 461 365
- US-A- 5 479 482
- US-A- 6 081 711

## Description

The present invention relates to a mobile communication system which may be of any type whatsoever. Such a system is GSM, for instance. A mobile telephone may be useful when transporting valuable goods or during some other transport or situation that may involve danger. In such a situation the perpetrator of a crime may very easily block signals emitted from the mobile telephone so that the owner of the mobile telephone is completely isolated. This is a considerable disadvantage. The purpose of the present invention is to provide a remedy for the above-mentioned situation where a mobile telephone can be blocked. In accordance with the invention a mobile communication arrangement is provided in accordance with claim 1. When operating in a first mode, a signal is continuously emitted by the mobile telephone, or through mobile telephones, whether it is in use or not. Said signal is received at the central venue of the mobile telephone system by the equipment placed in or built into this central venue, and where the absence of a signal triggers an indication such as an alarm. This is the single mode of operation in prior art arrangements, such as e.g. in US 5 416 468 A. In accordance with a further development of the present invention the continuously emitted signal is transmitted to an optional communication medium such as the Internet, in which case a special transmission device is used and the signal is supplied in the optional communication system to an alarm centre which immediately receives an alarm in the absence of a signal. The continuous signal may contain data as to the owner of the mobile telephone and may also define positional data. The continuous signal in a mobile telephone or other unit having similar capabilities may be emitted by a transmitter (of known type), and said transmitter may cooperate with a positioning system, e.g. the GPS system, thereby obtaining positional data so that when the transmitter emits signals the signal also contains data as to position.

In an arrangement in accordance with the present invention, thus, one or more of the mobile telephones contains a transmitter that continuously emits a signal whether the mobile telephone is being used or not. The transmitter is also suitably such that it receives positional data from a positioning system, e.g. the GPS system, so that a signal emitted continuously from the mobile telephone or other unit having similar capabilities, includes data as to position and information as to who owns the mobile telephone.

With known equipment such a signal can be blocked without any great difficulty. Should this occur the equipment receiving the signal in the central unit of the mobile telephone system will trigger an indication in the form of an alarm. However, this can be greatly facilitated by arranging a transmitting device from the mobile telephone system to an optional communication system such as the Internet, so that the continuous signal from a mobile telephone or other unit having similar capabilities is transmitted to a desired unit in the optional communication system and the desired unit may be an alarm centre that, in the absence of a signal, triggers an indication such as an alarm. The requisite measures can be taken with the aid of this alarm. Since the signal has been continuous the alarm centre has received continuous information as to the ownership and position of the mobile telephone. A suitable type of data medium for the continuous signal may be a so-called USSD signal or GPRS-IP packet, but it should be evident that considerable freedom exists to choose suitable signals.

Two embodiments of a device in accordance with the invention will be described by way of example in the following with reference to the accompanying drawings in which
- Figure 1: shows the USSD flow in a PLMN system,
- Figure 2: shows the GPRS flow in a PLMN system,
- Figure 3: shows an overall diagram of the arrangement,

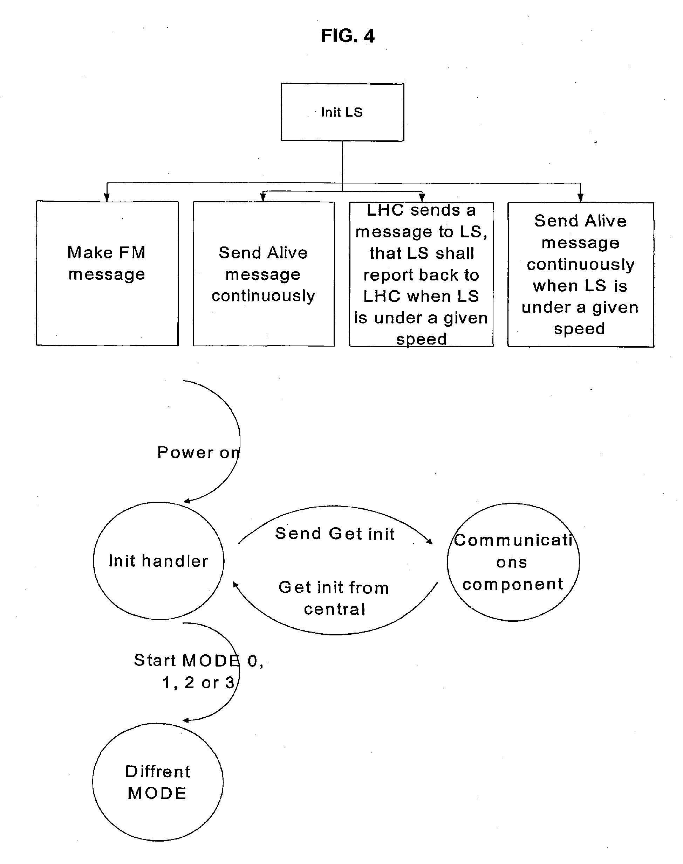

- Figure 4: shows an alarm component at initiation,

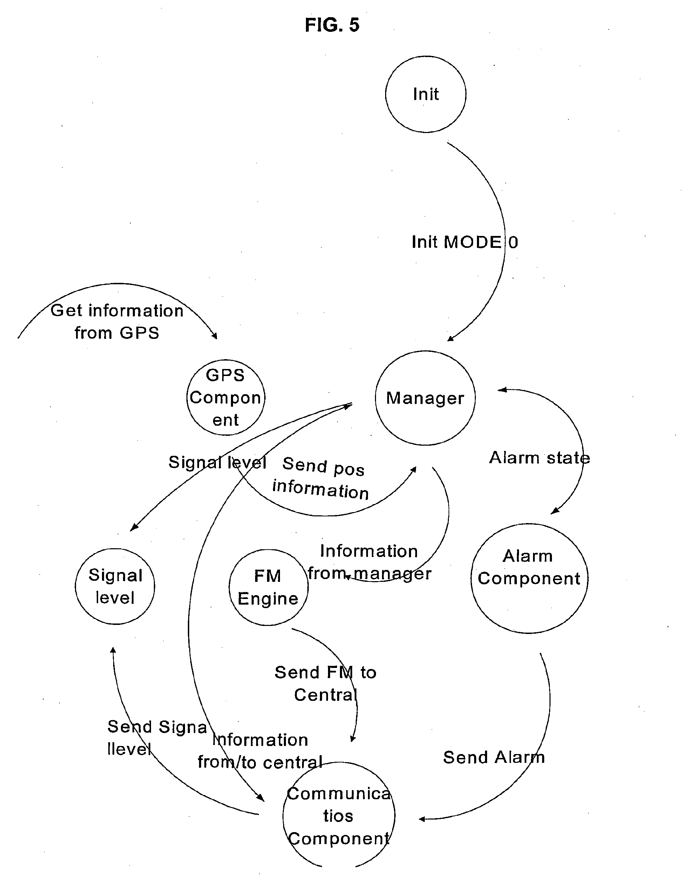

- Figure 5: shows processes upon initiation in accordance with Mode 0,

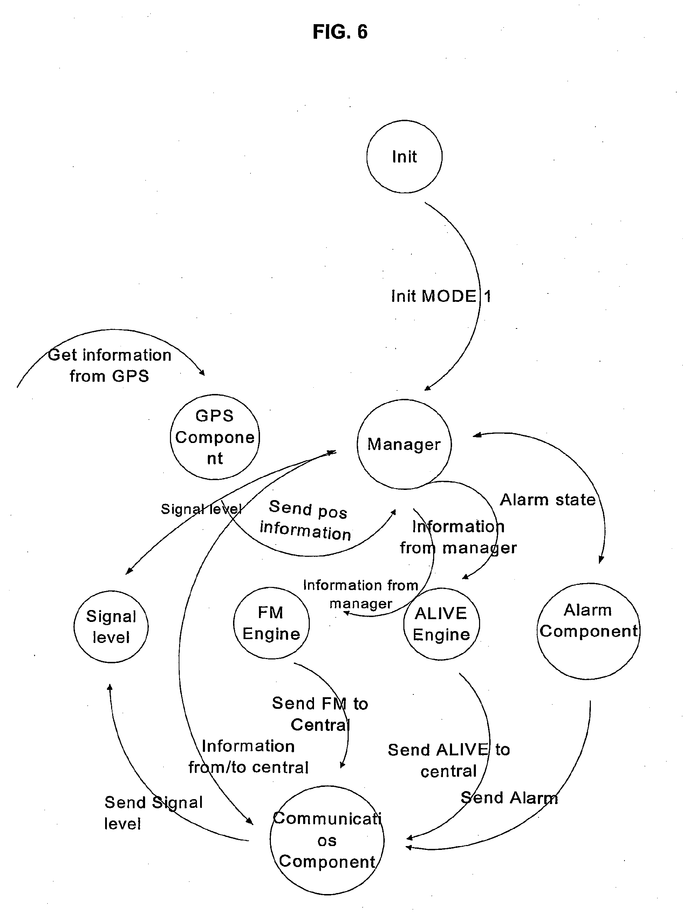

- Figure 6: shows processes upon initiation in accordance with Mode 1,

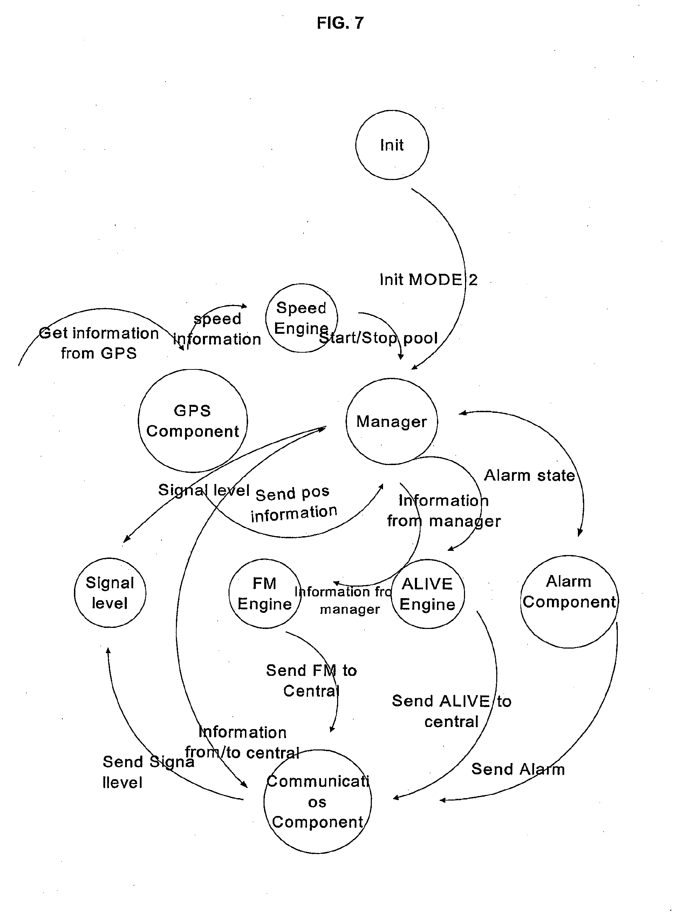

- Figure 7: shows processes upon initiation in accordance with Mode 2,

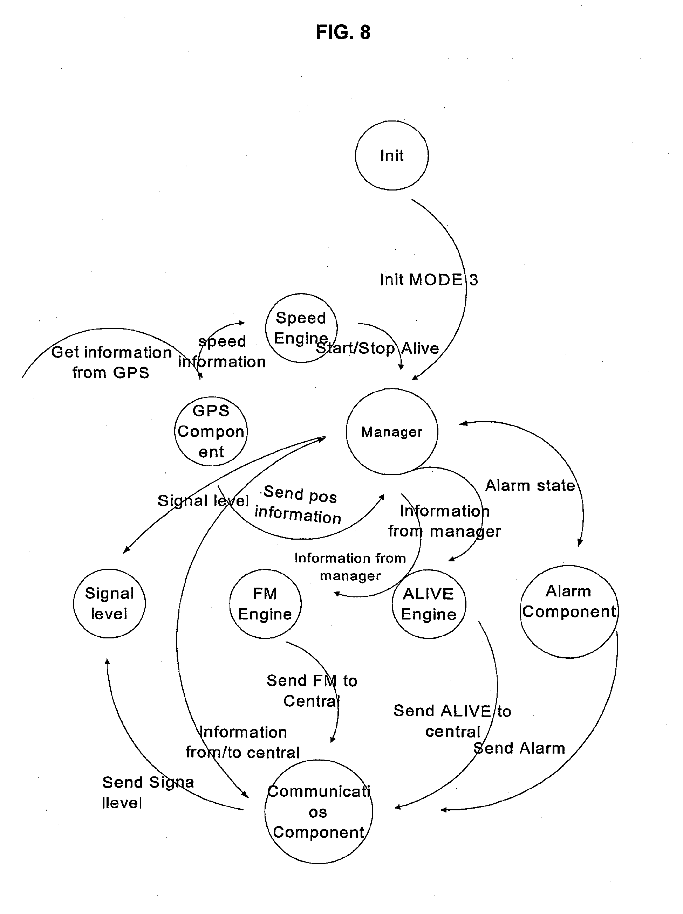

- Figure 8: shows processes upon initiation in accordance with Mode 3,
- Figure 9: shows data flow between the Mobile telephone alarm and the Alarm handling centre,
- Figure 10: shows data flow in accordance with Figure 9 in Mode 1,
- Figure 11: shows the same flow as in Figure 10 in Mode 2,
- Figure 12: shows the same flow as in Figure 10 in Mode 3,
- Figure 13: shows the same flow as in Figure 12 at external and internal alarm,
- Figure 14: shows data flow at signal level between the Mobile telephone alarm and the Alarm handling centre,
- Figure 15: shows data flow at alteration of initiation from the Mobile telephone alarm to the Alarm handling centre,

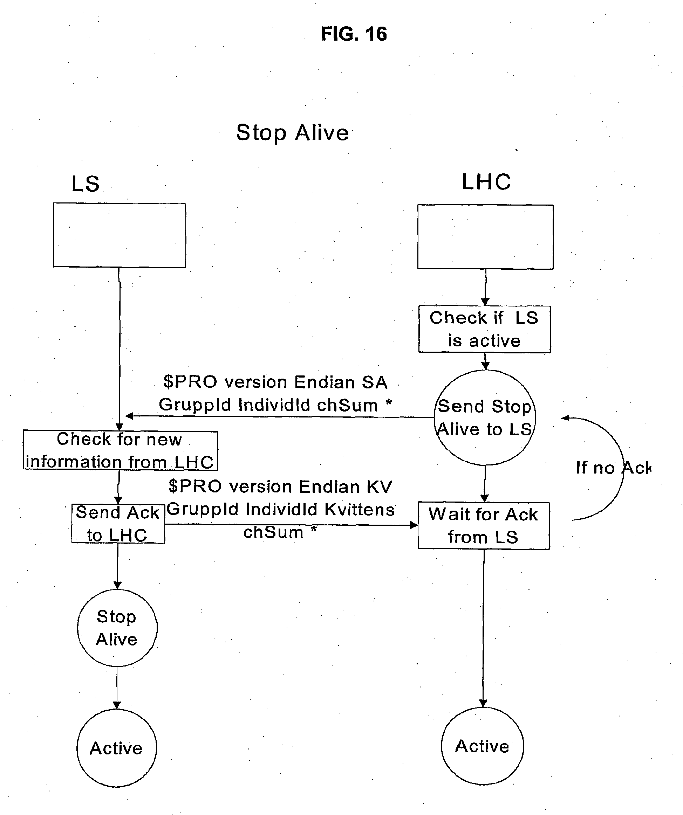

- Figure 16: shows data flow stop from the Mobile telephone alarm to the Alarm handling centre,

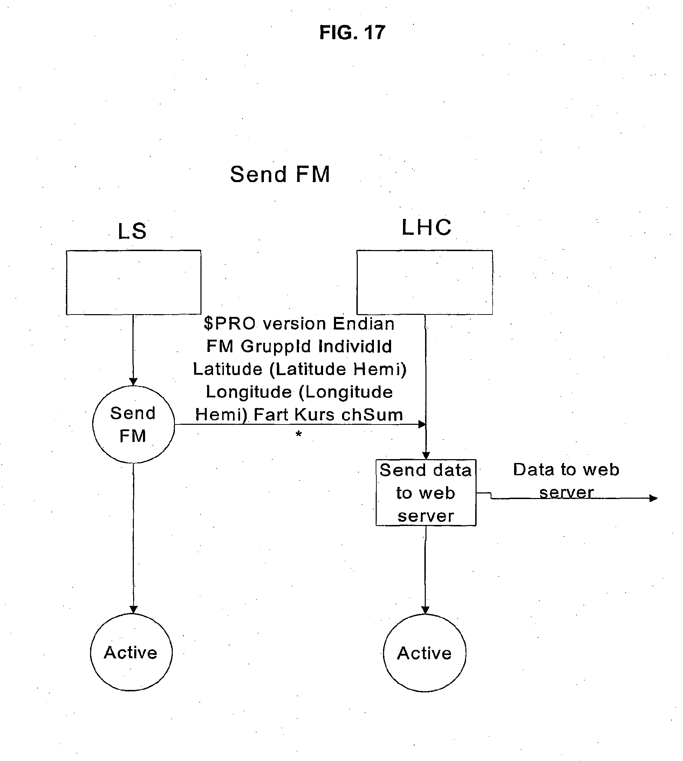

- Figure 17: shows data flow FM from the Mobile telephone alarm to the Alarm handling centre,
- Figure 18: shows data flow at logging in,
- Figure 19: shows data flow at data transmission,

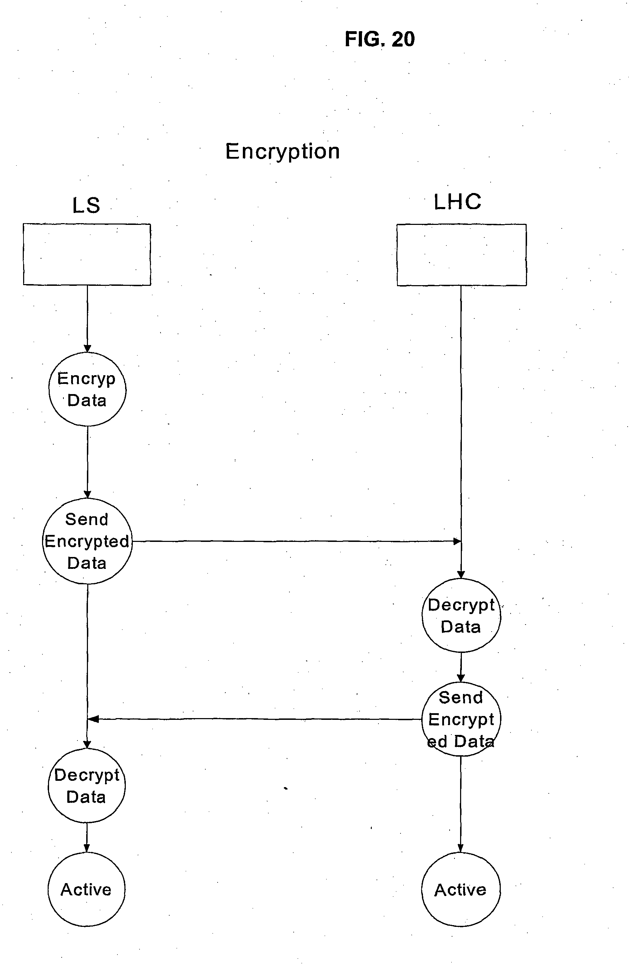

- Figure 20: shows data low at encryption,

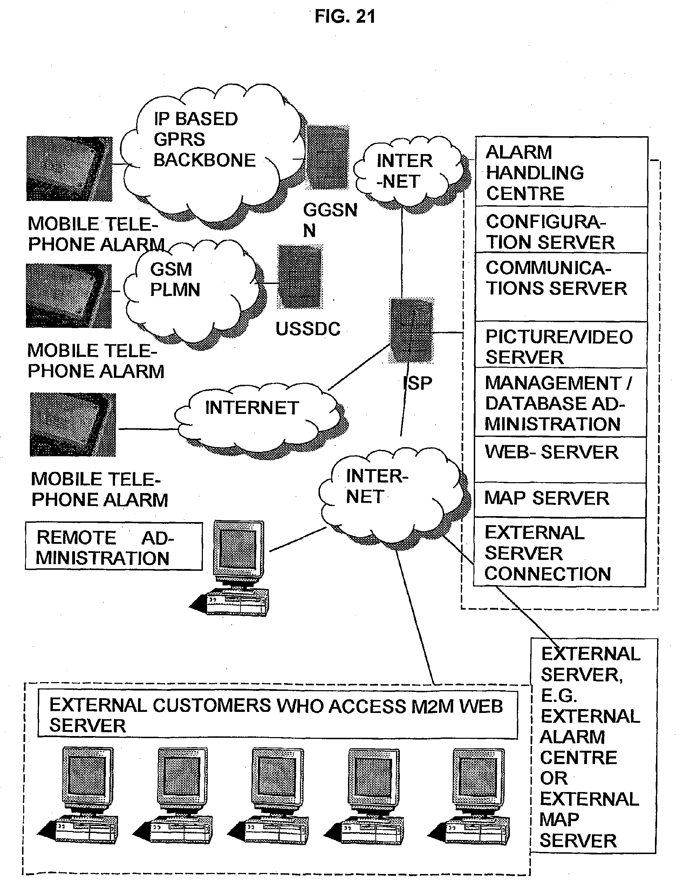

- Figure 21: shows a complete system,

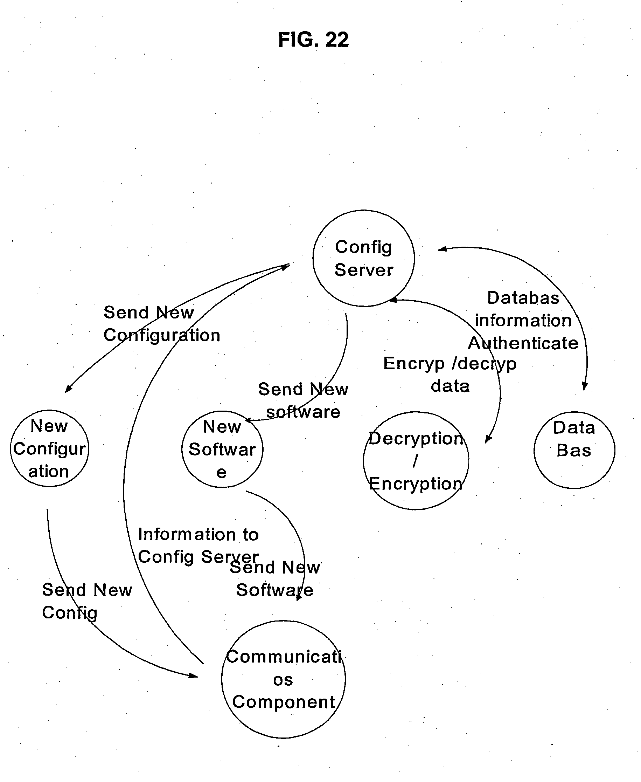

- Figure 22: shows processes in configuration server,

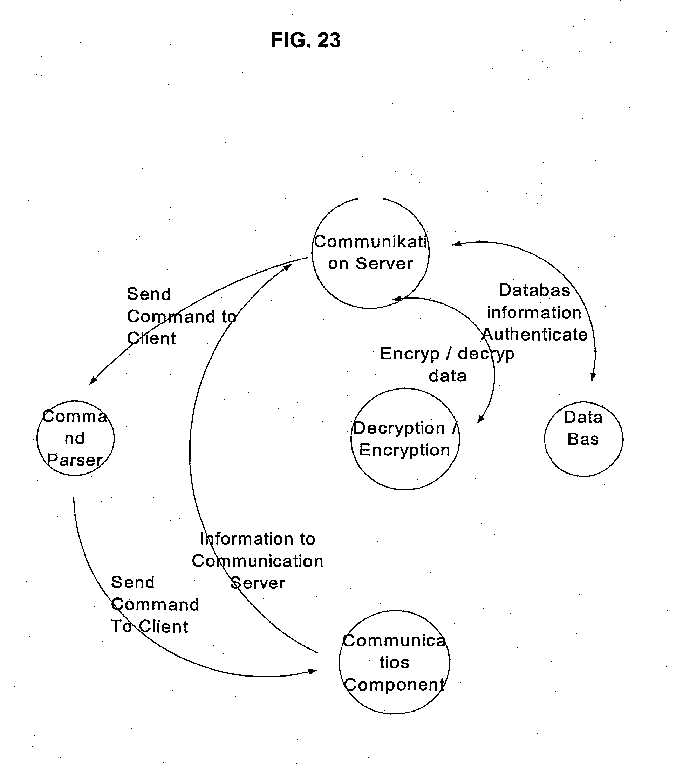

- Figure 23: shows processes in communications server,

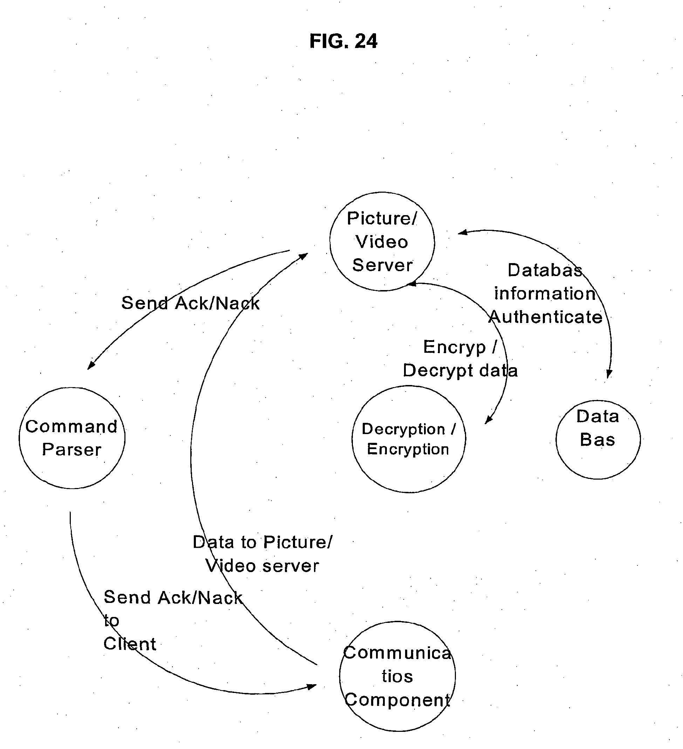

- Figure 24: shows processes in picture/video server,

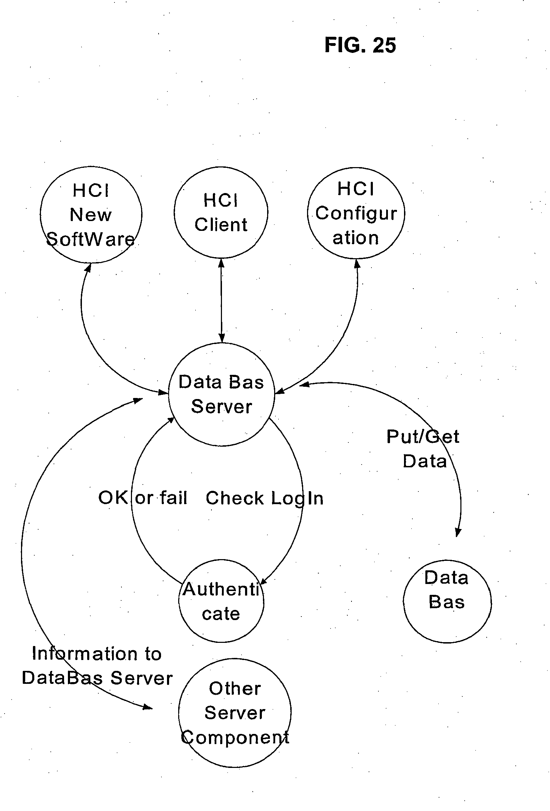

- Figure 25: shows processes in management/database handling,

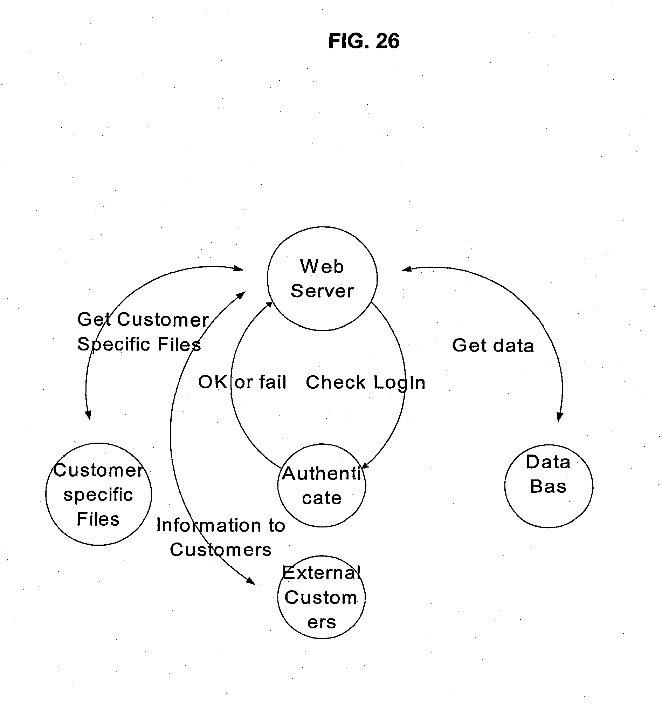

- Figure 26: shows processes in web server,

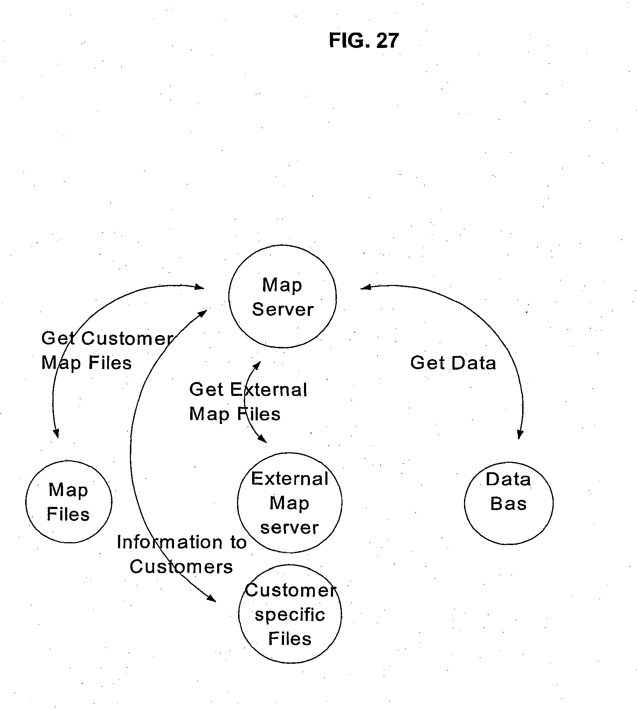

- Figure 27: shows processes in map server,

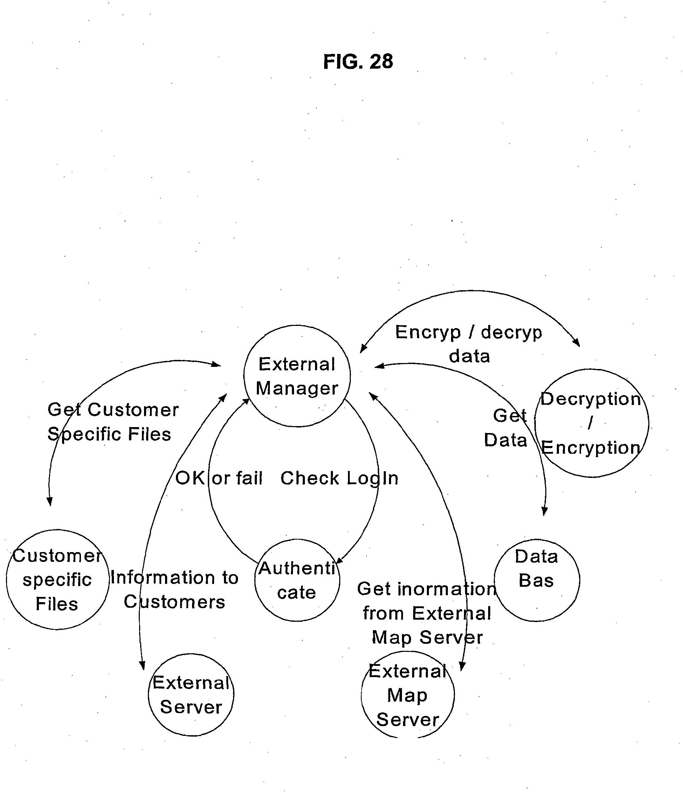

- Figure 28: shows processes at connection of external server,

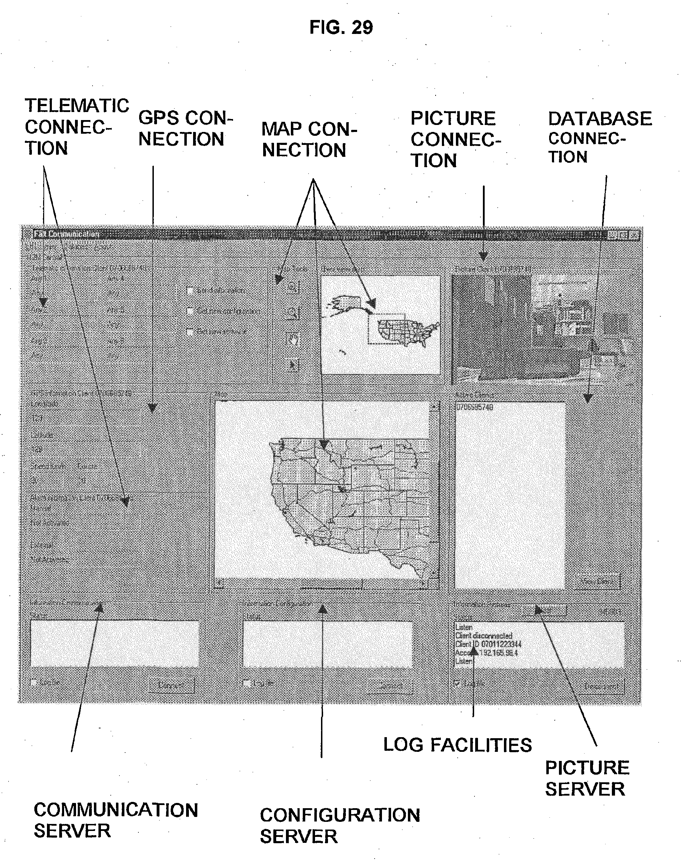

- Figure 29: shows a user interface for the application,

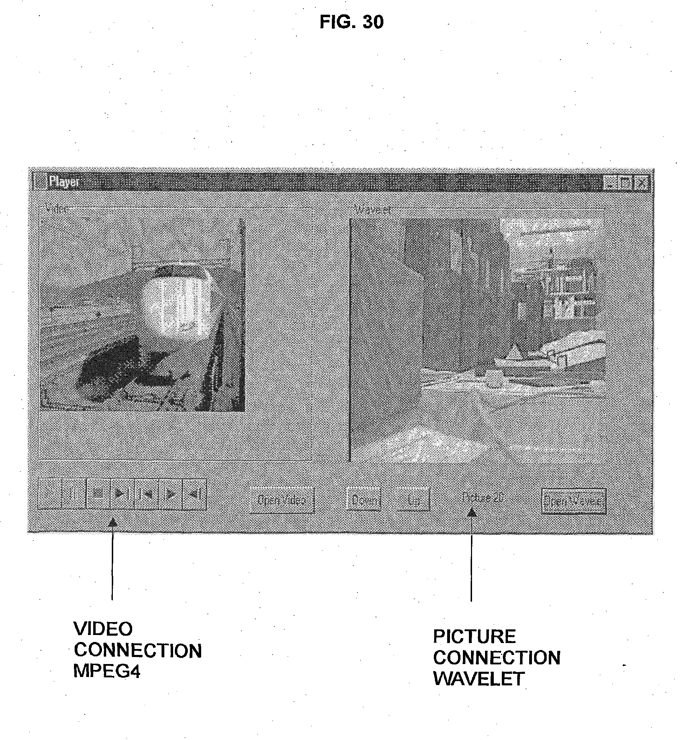

- Figure 30: shows a user interface for picture/video, and

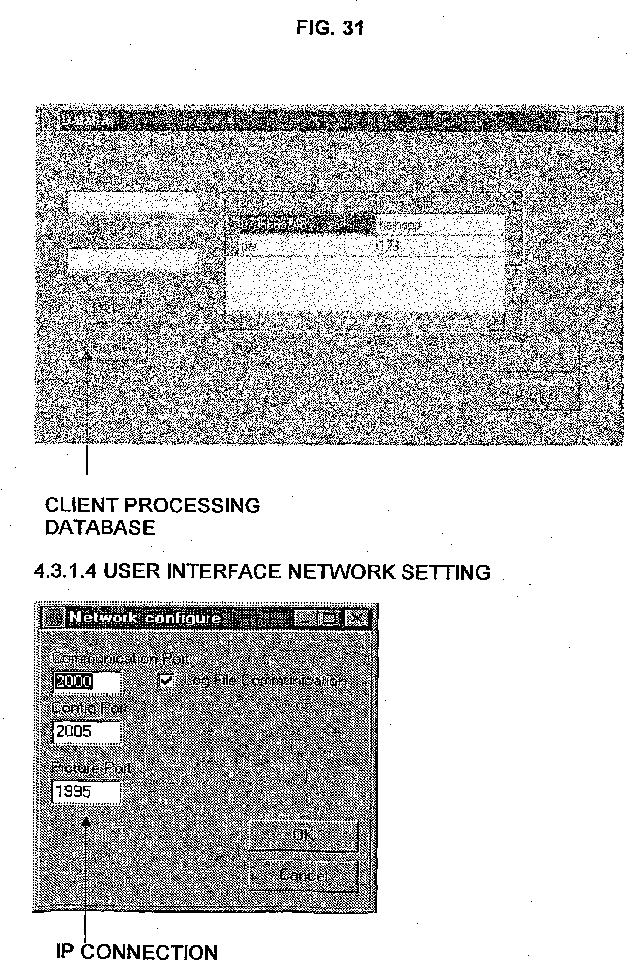

- Figure 31: shows user interface for database and network setting.

A list of abbreviations used in the following text is provided in Appendix A. Possible data media include those listed in Appendix B.

### USSD

USSD is a message in the mobile telephone network, e.g. a USSD message is used when forwarding a telephone number. The USSD message is closely related to SMS, the difference being that SMS is sent from MS to MS whereas USSD is sent from MS to PLMN or from PLMN to MS. This means that USSD is a message in the PLMN network. A USSD message can be sent at any time since it uses a different channel from speech/data traffic and USSD messages cannot therefore be disturbed by calling to the mobile telephone alarm.

USSD is suitable for use as a watchdog message, i.e. a message can be sent to the centre at certain predetermined intervals stating that one is alive. If these messages cease it means that the mobile telephone alarm may have been thrown out or has ceased sending USSD messages for some other reason, and an alarm shall then be generated in the central unit. USSD messages shall include the ID of the user and data as to position.

### The USSD flow in the PLMN system

For a USSD message to be generated it must be generated by a user or a computer via MS or the central unit.

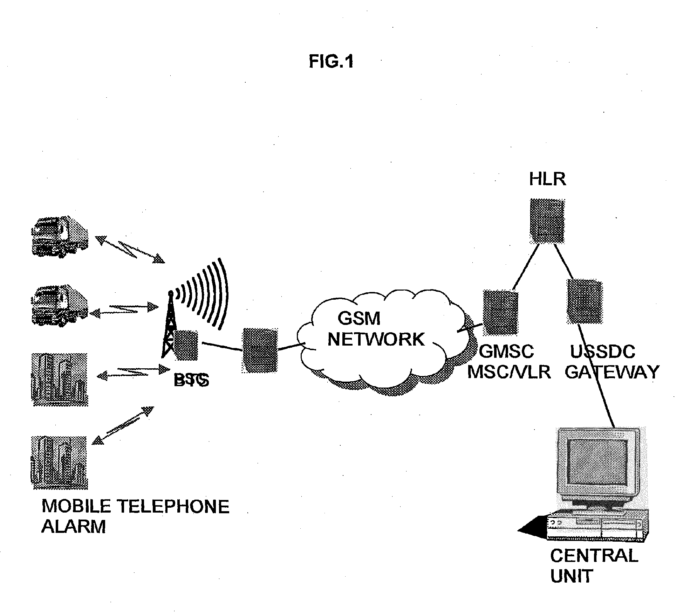

Figure 1 shows an example of how USSD messages are processed by PLMN. PLMN contains MS, MSC/VLR and HLR (External node). No USSDC gateway therefore exists in a modern PLMN.

When MS sends a USSD message, therefore, VLR will receive it. VLR identifies the message and if it is addressed to HLR it will send it there. HLR detects that the USSD message is to be sent to an external node. The gateway accepts the messages and sends the USSD/watchdog message to the central unit via TCP/IP, E-mail or PSTN.

The central unit can send USSD messages to MS. The central unit, for instance, shall be able to initiate the intervals at which the mobile telephone alarm shall send USSD messages.

### GPRS

GPRS is an upgrading of the existing GSM networks. This means that data will travel in separate data channels and speech will travel in the old GSM network.

GPRS enables data links with short connection time. Data will be transported with IP (packet-forwarded technology) and the quantity of data transmitted will determine the cost. With the present GSM network the cost depends on connection time which means that it costs even if no data is transmitted.

One is hooked up the whole time with GPRS but is charged only for the quantity of data transmitted.

### The GPRS flow in the PLMN system

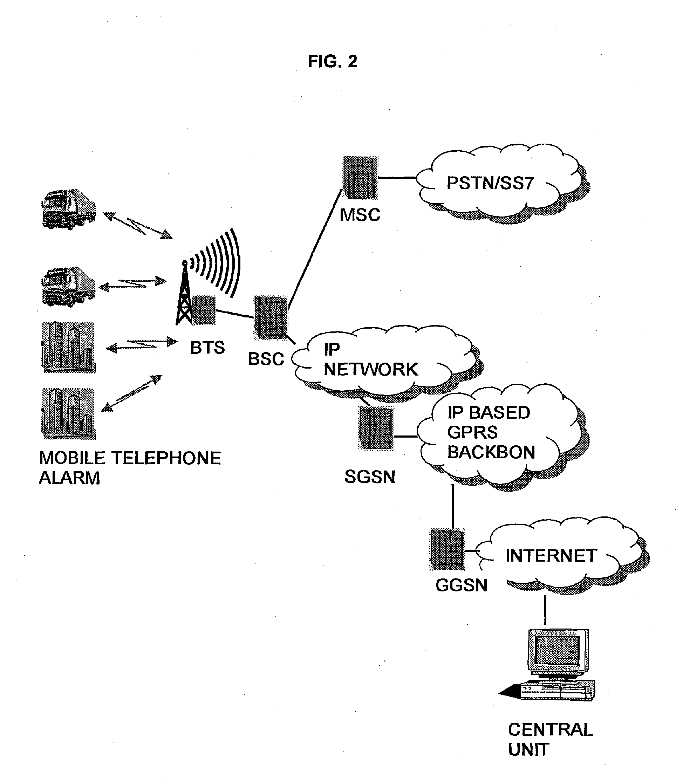

The new nodes are an SGSN which utilizes the system's HLR but is otherwise independent of the MSC. The task of the SGSN is to put packet data out on the Internet. This occurs via an IP connection with the other new node GGSN which is in contact via an IP or ATM network with the Internet or Intranet where our central unit receives the Watchdog messages. The GPRS flow in a PLMN system is shown in Figure 2.

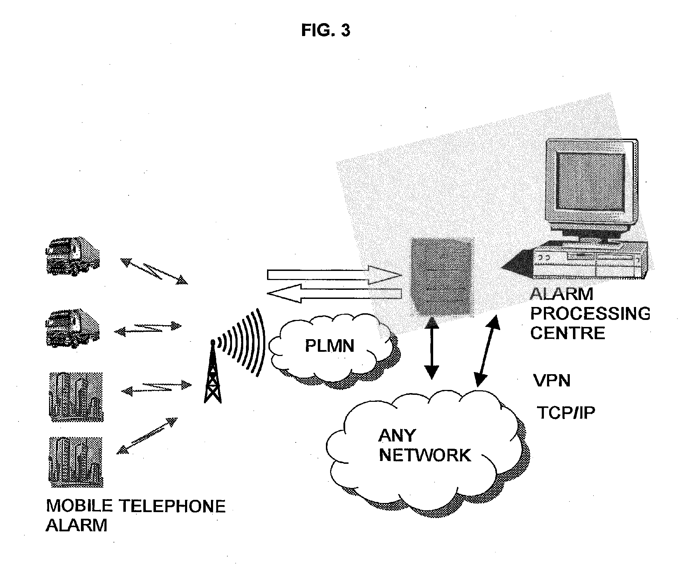

Figure 3 shows an overall diagram of the arrangement with Mobile telephone alarm:
   The mobile telephone alarm consists of an MS which supports GSM data and GPRS, computer and positional information equipment.
PLMN: The system will make use of the existing PLMN.
Gateway: The USSDC Gateway or GGSN is the connection between PLMN and Internet/PSTN. The gateway will receive USSD messages or IP traffic from PLMN and forward these to the central unit.
Alarm handling centre:
   The centre receives USSD messages or packets via IP traffic containing watchdog information from Gateway and controlling which mobile telephone alarms have sent in watchdog messages. An alarm shall be generated if a Mobile telephone alarm ceases to send in its watchdog messages. The centre shall be able to initiate the mobile telephone alarm specifying, for instance, how often a watchdog message shall be generated by the mobile telephone alarm.

### Mobile telephone alarm

The mobile telephone alarm is a unit whose main purpose is to send in an Alive message to an Alarm handling centre (LHC) If the Mobile telephone alarm ceases to send in its message the Alarm handling centre shall generate an alarm.

If necessary, the driver shall be able to generate an alarm, external alarm devices shall be able to generate alarms.

If the customer wishes to have Fleet management (FM) the Mobile telephone alarm shall generate FM messages. These messages have no security, i.e. if one of these messages disappears no alarm measures shall be taken.

The system will have 5 different security levels.
- The level 1 Mobile telephone alarm sends in an Alive message every 12 hours.
- The level 2 Mobile telephone alarm sends in an Alive message once every hour.
- The level 3 Mobile telephone alarm sends in an Alive message every 10 minutes.
- The level 4 Mobile telephone alarm sends in an Alive message once a minute.
- The level 5 Mobile telephone alarm sends in an Alive message continuously.

The alarm handling centre has the details of which security level each Mobile telephone alarm has and during which times the Mobile telephone alarm will be active.

When starting up the Mobile telephone alarm the sender shall request the Alarm handling centre to initiate the Mobile telephone alarm with the security level the Mobile telephone alarm shall have.

The primary task of the Mobile telephone alarm is to generate Alive messages with positional information.

The tasks of the Mobile telephone alarm can be divided into sub-tasks:

| | |
|---|---|
| • Initiation | (Init Handler) |
| • Process positional data from GPS | (GPS Component) |
| • Generate Alive messages continuously or if a certain condition is fulfilled, e.g. if the speed falls below a certain level | (Speed Engine) |
| • Generate Alive messages on request | (Alive Engine) |
| • Generate fleet management | (FM Engine) |
| • Control external alarm | (Alarm Component) |
| • Control signal level | |
| • Generate alarm from manual alarm or from an external alarm unit | (Alarm Component) |
| • Process information from the Alarm handling centre | (Comm. Component) |

The Mobile telephone alarm can be initiated as follows and the Mobile telephone alarm may be in four modes:

### Mode 0

MODE 0, LS sends in only FM messages.

### Mode 1

After initiation the Mobile telephone alarm continuously sends Alive messages. Fleet management is optional. This mode is intended primarily for stationary Mobile telephone alarms.

### Mode 2

MODE 2, If the vehicle is stationary or the average speed during one minute is less than 10 km/h, the Mobile telephone alarm sends a message to the Alarm handling centre that the Alarm handling centre can start pooling. Fleet management is optional. The Mobile telephone alarm must be stationary during initiation.

### Mode 3

The Mobile telephone alarm is initiated to only send Alive messages when the speed of the vehicle is below 10 km/h and to cease sending Alive messages when the average speed of the vehicle has been more than 30 km/h for one minute. When the average speed of the vehicle exceeds 30 km/h for one minute the Mobile telephone alarm sends in a message to the Alarm handling centre that the Mobile telephone alarm will stop sending Alive messages. The Mobile telephone alarm sends the message to the Alarm handling centre, which sends an acknowledgement. The Alarm handling centre sends the acknowledgement until the Mobile telephone alarm has stopped sending that it will cease to send Alive messages. The Mobile telephone alarm must be stationary during initiation.

### Initiation message:

#PRO version Endian IN Gruppld IndividId SIstatus FMstatus Level Mode chSum*

The SI parameter shall be set if the Mobile telephone alarm is to send in the signal level of the mobile telephone module.
SIstatus = 0 = off.
Slstatus = 1 = on.

The FM parameter shall be set if the Mobile telephone alarm shall send in fleet management messages and at which intervals the Mobile telephone alarm shall send FM messages.
FMstatus = 0 = off.
FMstatus = 1-255 = on. (1-255 indicates how often the Mobile telephone alarm shall send in the FM message).

The MODE parameter is used to set which mode the Mobile telephone alarm shall be in.
MODE = 0,1,2,3.

The LEVEL parameter is used to set which security level the Mobile telephone alarm shall be in.

LEVEL = 0-255 indicates which security level the Mobile telephone alarm shall be in.

A description now follows of how information from GPS is processed.

The GPS sends its information via RS 232. The protocol used by the GPS is NMEA. In the NMEA protocol it is possible to choose between various GPS strings, e.g. $GPRMC is suitable for obtaining positional data. The GPS shall supply the Mobile telephone alarm with positional data in WGS 84 LatLong.

### $GPRMC,<1>,<2>,<3>,<4>,<5>,<6>,<7>,<8>,<9>,<10>,<11>,<12>*hh<C R><LF>

- 1 UTC time in hhmmss
- 2 Status A = valid position V = NAV warning
- 3 Latitude ddmm,mmmm
- 4 Latitude hemisphere N or S
- 5 Longitude dddmm,mmmm
- 6 Longitude hemisphere N or S
- 7 Speed in knots
- 8 course in degrees
- 9 UTC date
- 10 magnetic variation
- 11 magnetic variation direction
- 12 Mode
- CRC

An Alive message can be generated according to Mode 1. Upon initiation, the Mobile telephone alarm receives information as to which mode the Mobile telephone alarm shall be in.
- Mode 1, The Mobile telephone alarm sends in Alive messages continuously.

If the Mobile telephone alarm is initiated in Mode 1 it will be advised by the Alarm handling centre at what intervals it shall send in the message and whether the Mobile telephone alarm shall send in Alive messages continuously or if the speed falls below 10 km/h.

Start, Stop Alive message is built up in accordance with the following protocol.

$PRO version Endian STA GruppId IndividId Status chSum* Status = 0 = Mobile telephone alarm stops sending Alive messages. Status = 1 = Mobile telephone alarm starts sending Alive messages.

The Alive message is built up in accordance with the following protocol.

$PRO version Endian AL Gruppld IndividId Latitude (Latitude Hemi) Longitude (Longitude Hemi) Speed Course chSum*

The acknowledgement message from the Alarm handling centre is built up in accordance with the following protocol. For the acknowledgement to be valid **Acknowledgement** shall correspond to 0x0A in both directions.

$PRO version Endian Ack Gruppld Individld Acknowledgement chSum*

Alive messages can be generated in accordance with Mode 2. At initiation the Mobile telephone alarm receives information as to which mode the Mobile telephone alarm shall be in.

Mode 2, The Mobile telephone alarm sends in the message when the Alarm handling centre asks for it.

If the speed of the vehicle falls below 10 km/h the Mobile telephone alarm sends a message to the Alarm handling centre that the Alarm handling centre shall start pooling the Mobile telephone alarm. The Mobile telephone alarm sends the message until the Alarm handling centre has started pooling. When the Alarm handling centre has starting pooling the Mobile telephone alarm interprets this as an acknowledgement and stops sending StartPool.

When the average speed of the vehicle exceeds 30 km/h for one minute the Mobile telephone alarm sends a message to the Alarm handling centre for the Alarm handling centre to stop pooling the Mobile telephone alarm. The Mobile telephone alarm sends the message until the Alarm handling centre sends an acknowledgement. The Alarm handling centre sends the acknowledgement until the Mobile telephone alarm has stopped sending StopPool.

The Pooling message from the Mobile telephone alarm to the Alarm handling centre is built up in accordance with the following protocol.
$PRO version Endian SP Gruppld IndividId Status chSum*
Status = 0 = Stop pooling
Status = 1 = Start pooling.

The Pooling message from the Alarm handling centre to the Mobile telephone alarm is built up in accordance with the following protocol.

$PRO version Endian P GruppId IndividId Status chSum*

The Alive message is built up in accordance with the following protocol.

$PRO version Endian AL GruppId IndividId Latitude (Latitude Hemi) Longitude (Longitude Hemi) Speed Course chSum*

The acknowledgement message from the Alarm handling centre is built up in accordance with the following protocol. For the acknowledgement to be valid **Acknowledgement** shall correspond to 0x0B.

$PRO version Endian Ack GruppId Individld Acknowledgement chSum*

Generation of Alive messages in accordance with Mode 3. At initiation the Mobile telephone alarm receives information as to which mode the Mobile telephone alarm shall be in.
- Mode 1, The Mobile telephone alarm sends in the Alive message if the speed falls below 10 km/h.

If the Mobile telephone alarm is initiated in Mode1 it is informed by the Alarm handling centre at what intervals it shall send in the message and whether the Mobile telephone alarm shall send in Alive messages continuously or if the speed falls below 10 km/h.

The following applies when the Mobile telephone alarm is initiated to send in Alive messages only if the speed of the vehicle falls below the limit:
If the speed of the vehicle falls below 10 km/h the Mobile telephone alarm sends a message to the Alarm handling centre for it to start sending Alive messages. The Mobile telephone alarm sends the message until the Alarm handling centre sends acknowledgement. The Alarm handling centre sends acknowledgements until the Mobile telephone alarm starts sending Alive messages. When the Mobile telephone alarm has started sending Alive messages the Alarm handling centre interprets this as an acknowledgement and stops sending acknowledgements.

When the average speed of the vehicle exceeds 30 km/h for one minute the Mobile telephone alarm sends a message that it will stop sending Alive messages. The Mobile telephone alarm sends these messages and the Alive message until the Alarm handling centre sends an acknowledgement. The Alarm handling centre sends acknowledgements until the Mobile telephone alarm has stopped sending the Alive message and that it will stop sending the Alive message.

The Start, Stop Alive message is built up in accordance with the following protocol.
$PRO version Endian STA GruppId Individld Status chSum*
Status = 0 = Mobile telephone alarm stops sending Alive.
Status = 1 = Mobile telephone alarm starts sending Alive.

The Alive message is built up in accordance with the following protocol.

$PRO version Endian AL Gruppld IndividId Latitude (Latitude Hemi) Longitude (Longitude Hemi) Speed Course chSum*

The acknowledgement message from the Alarm handling centre is built up in accordance with the following protocol. For the acknowledgement to be valid **Acknowledgement** shall correspond to 0x0A in both directions.

$PRO version Endian Ack Gruppld IndividId Acknowledgement chSum*

### Control of external alarms

If an external unit sends an alarm, e.g. a cover alarm, an external alarm message shall be generated and send to the alarm centre. When an external alarm has been activated the Mobile telephone alarm sends in the alarm message continuously once a minute until an acknowledgement has been received from the Alarm handling centre.

An external alarm message is built up in accordance with the following protocol.

$PRO version Endian LA Gruppld IndividId Latitude (Latitude Hemi) Longitude (Longitude Hemi) Speed Course Alarm code chSum* Alarm code 0x80-0xFF.

The acknowledgement message from the Alarm handling centre is built up in accordance with the following protocol. For the acknowledgement to be valid **Acknowledgement** shall correspond to the Alarm code.

$PRO version Endian Ack Gruppld Individld Acknowledgement chSum*

### Generation of alarm through manual alarm

If the client is in some kind of danger the client shall be able to raise an alarm. The Mobile telephone alarm shall check whether an external alarm button has been activated. If the alarm button is activated the Mobile telephone alarm shall send in the alarm message once a minute until the Alarm handling centre has acknowledged the alarm.

A manual alarm message is built up in accordance with the following protocol.

$PRO version Endian LA GruppId IndividId Latitude (Latitude Hemi) Longitude (Longitude Hemi) Speed Course Alarm code chSum*

Alarm code 0x80-0xFF.

The acknowledgement message from the Alarm handling centre is built up in accordance with the following protocol. For the acknowledgement to be valid **Acknowledgement** shall correspond to the Alarm code.

$PRO version Endian Ack GruppId IndividId Acknowledgement chSum*

### Control of signal level

If the Mobile telephone alarm has been initiated to send in its receiving signal level from the mobile telephone module, the Mobile telephone alarm shall continuously check the signal level of the transmitter. If the signal level falls below a certain level a message shall be sent to the Alarm handling centre. The function enables a database to be constructed concerning the extent of the PLMN network.

A signal level message is built up in accordance with the following protocol.

$PRO version Endian SI Gruppld Individld Latitude (Latitude Hemi) Longitude (Longitude Hemi) SignalLevel chSum*
SignalLevel = 0x00-0xFF.

### Processing information from the Alarm handling centre

The configuration server in the Alarm handling centre initiates the Mobile telephone alarm at start-up. The Mobile telephone alarm then receives information as to which mode and security level it shall be in contact with.

When the Mobile telephone alarm communicates with the Alarm handling centre, the Alarm handling centre can give commands to the Mobile telephone alarm, e.g. for the Mobile telephone alarm to contact the configuration server to alter the initiation.

### Initiation mode:

When the Mobile telephone alarm is started it sends a message to the Configuration server in the Alarm handling centre that it is to be initiated. The Mobile telephone alarm sends the message until the Alarm handling centre sends the initiation message. The Alarm handling centre sends the initiation message until the Mobile telephone alarm starts sending the Alive message or sends a message that the Alarm handling centre can pool the Mobile telephone alarm. The Alarm handling centre interprets this as an acknowledgement and stops sending the initiation message.

A Get init message from the Mobile telephone alarm to the Alarm handling centre is built up in accordance with the following protocol.
$PRO version Endian GI Gruppld IndividId chSum*

The initiating message from the Alarm handling centre is built up in accordance with the following protocol.

$PRO version Endian IN Gruppld IndividId Slstatus FMstatus Level Mode chSum*

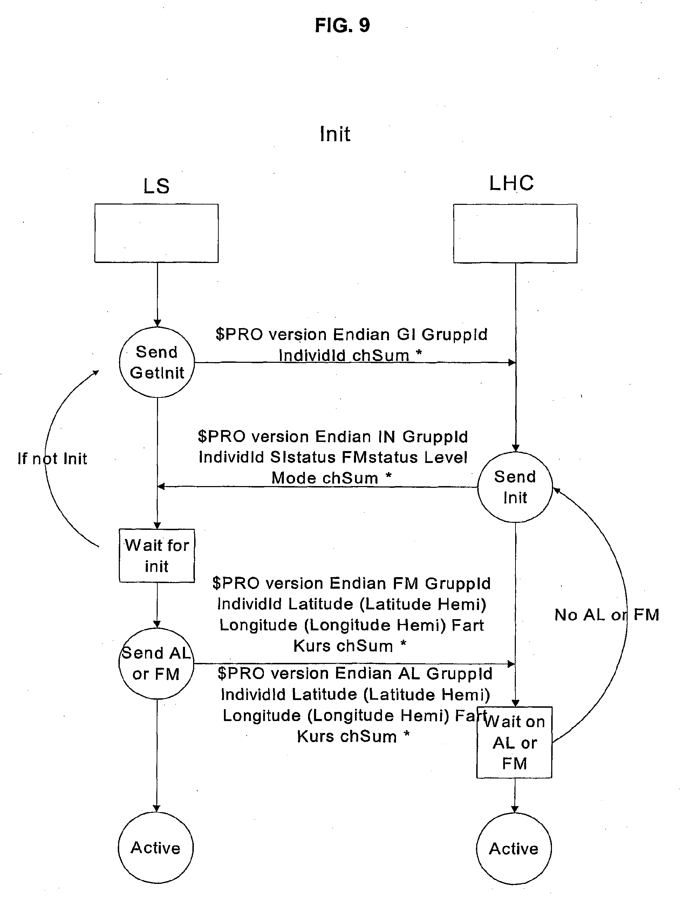

See the communication flow in Figure 9, Data flow between the Mobile telephone alarm and the Alarm handling centre.

### Alteration of initiation

The Alarm handling centre can change the initiation as follows:
The Alarm handling centre can increase the security levels in the Mobile telephone alarm but it cannot decrease the security levels when the Mobile telephone alarm is initiated. The Alarm handling centre can close or open FM messages. The Alarm handling centre can stop or start the Mobile telephone alarm sending its signal level.
The Alarm handling centre sends the alteration of initiation message to the Mobile telephone alarm once a minute until the Mobile telephone alarm sends in an acknowledgement. The Mobile telephone alarm sends acknowledgement once a minute until the Alarm handling centre has ceased to send the alteration of initiation message.

An alteration of initiation message is built up in accordance with the following protocol.
$PRO version Endian CH Gruppld IndividId Slstatus FMstatus Level Mode chSum*.

The acknowledgement message is built up in accordance with the following protocol.
$PRO version Endian Ack GruppId IndividId Acknowledgement chSum*
Increase security Acknowledgement = 0x0C.
Stop FM acknowledgement = 0x0D.
Start FM acknowledgement = 0x0F.
Stop signal level Acknowledgement = 0x10.
Start signal level Acknowledgement = 0x11.

### Stop Alive message:

The Alarm handling centre has information as to which times the Mobile telephone alarm shall send Alive messages. When the Mobile telephone alarm has passed its stop time the Alarm handling centre sends a message every minute for the Mobile telephone alarm to cease sending information. The Mobile telephone alarm sends an acknowledgement message that the Mobile telephone alarm has received the stop message until the Alarm handling centre stops sending the Stop Alive message.

The Stop Alive message is built up in accordance with the following protocol.

$PRO version Endian SA Gruppld IndividId chSum*

The acknowledgement message is built up in accordance with the following protocol.

$PRO version Endian Ack Gruppld IndividId Acknowledgement chSum*

The Stop Alive acknowledgement = 0x12.

### Generation of FM messages.

Upon initiation the Mobile telephone alarm receives information as to whether it shall send FM messages and at what intervals.

The FM message is built up in accordance with the following protocol. $PRO version Endian FM Gruppld IndividId Latitude (Latitude Hemi) Longitude (Longitude Hemi) Speed Course chSum*

### Logging in

All communication between the Mobile telephone alarm and the Alarm handling centre occurs after the Mobile telephone alarm has logged into the Alarm handling centre. If the Mobile telephone alarm is unable to log in it shall send an e-mail to the system administrator. The Alarm handling centre shall log in all unsuccessful logging in attempts.

### Data flow transmission

When the Mobile telephone alarm is to transmit large quantities of data, e.g. a picture or a video sequence, the Mobile telephone alarm will contact the Picture/video server in the Alarm handling centre. The Mobile telephone alarm transmits data and packet number to the Alarm handling centre which sends the packet number as Ack or 0x00 as Nack. If the Mobile telephone alarm receives a Nack the packet will be transmitted again. A stop packet is sent to the Alarm handling centre when the Mobile telephone alarm has finished transmitting data.

### Encryption

All communication between the Mobile telephone alarm and the Alarm handling centre is encrypted. Encryption keys are distributed when the Mobile telephone alarm is manufactured.

### Gateway

The task of the Gateway is to transmit data between different parts of the network, e.g. between PLMN and the Internet.

### Gateway USSD

USSD messages are only in the PLMN network. A message can be sent from the mobile telephone to the network or from the PLMN network to the mobile telephone. The PLMN network must be supplemented with a USSDC to enable a message to be sent from the mobile telephone to an Alarm handling centre

USSDC's task is to receive PLMN's USSD messages and forward these to the Alarm handling centre.

### Gateway GPRS

A gateway between GPRS PLMN (GGSN) and the Internet exists in GPRS. The GGSN's task is to forward IP packets to be sent via the Internet.

The GGSN's task is to receive IP packets from the Mobile telephone alarm and send them to the Alarm handling centre.

### The Alarm handling centre

The task of the Alarm handling centre is to monitor that the Mobile telephone alarm sends in Alive messages. If one or more the Mobile telephone alarms ceases to send Alive messages the Alarm handling centre shall generate an alarm to an external centre.

The Alarm handling centre has a web interface where external customers can obtain data about their clients. The central has access to maps so that external customers can see where their objects are located on a digital map.

The centre may consist of eight different main processors.
- Configuration server
- Communication server
- Picture/video server
- Management /Database processing
- Web server
- Map server
- External server connection.

The Alarm handling centre and web server may be physically in the same place whereas it is advisable for External central units to be situated physically in a different place.

The Alarm handling centre may physically be in an Intranet with high security. The web server is suitably in its own Intranet (DMZ), separate from the Alarm handling centre.

### Configuration server

The task of the configuration server is to initiate the Mobile telephone alarm and to upgrade the software in the Mobile telephone alarm if a new software version is available.

When the Mobile telephone alarm is started for the first time it has no information as to which Alarm handling centres it shall communicate with. The Mobile telephone alarm only has information as to which configuration server it shall contact. When the Mobile telephone alarm contacts the configuration server it receives information as to which Alarm handling centre and the behaviour of the Mobile telephone alarm.

Communication with the Communication server starts when the Mobile telephone alarm has received its configuration. The communication server can give commands for it to contact the configuration server for a new configuration or that the Mobile telephone alarm shall collect a new software version from the configuration server.

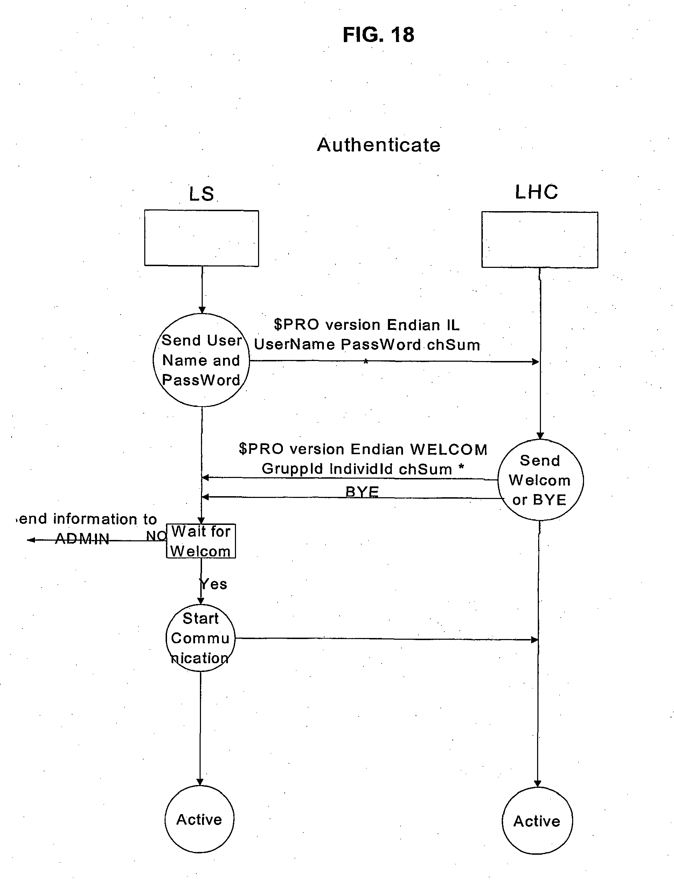

For data flows, please refer to
Initiation of the Mobile telephone alarm on page 7, Figure 9
Data flow logging in on page 18, Figure 18

### Communication server

The task of the communication server is to communication with the Mobile telephone alarm and to update the information in the database.

When the Mobile telephone alarm is connected to the Alarm handling centre, the Alarm handling centre can give the Mobile telephone alarm various commands, e.g. stop Alive, collect new configuration, collect new software, etc.

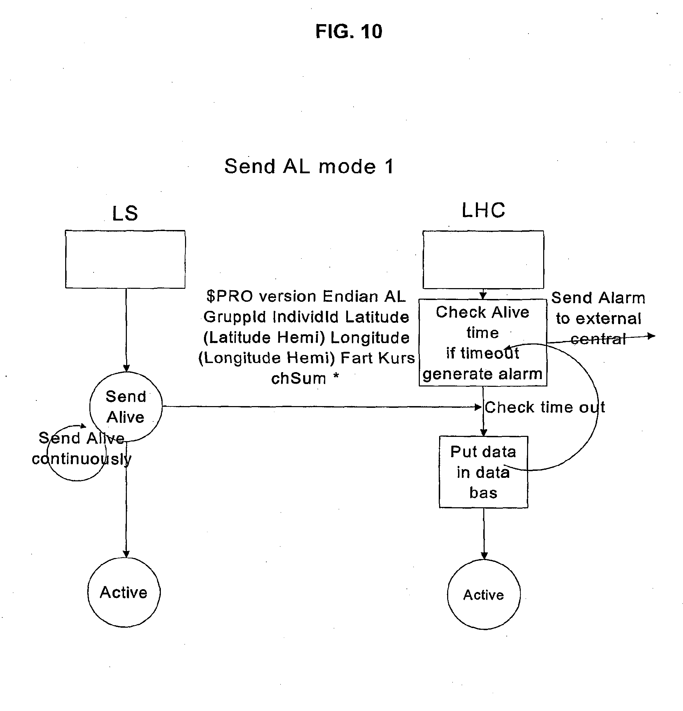

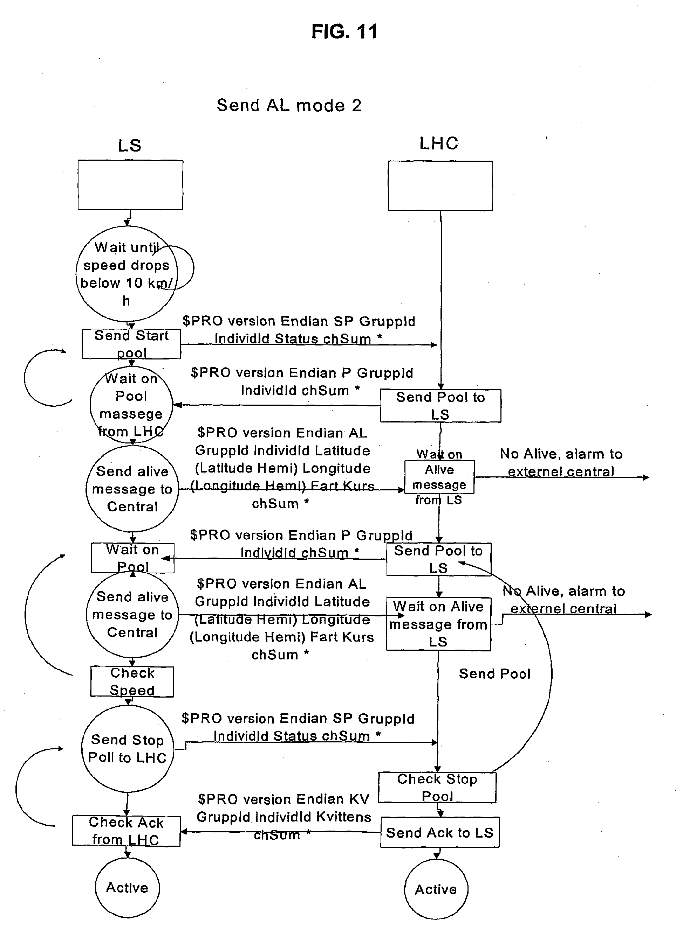

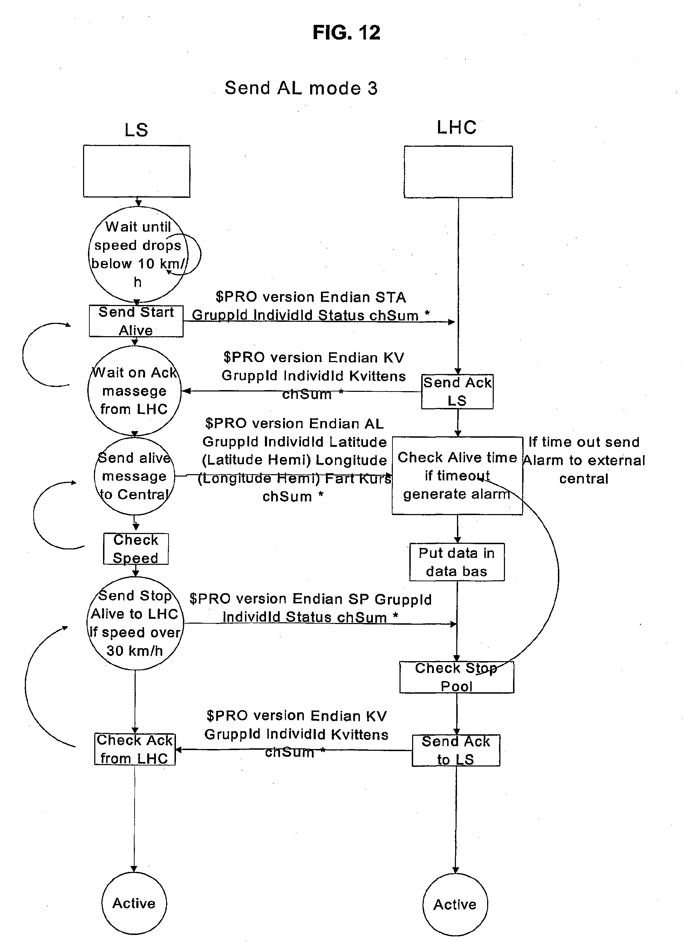

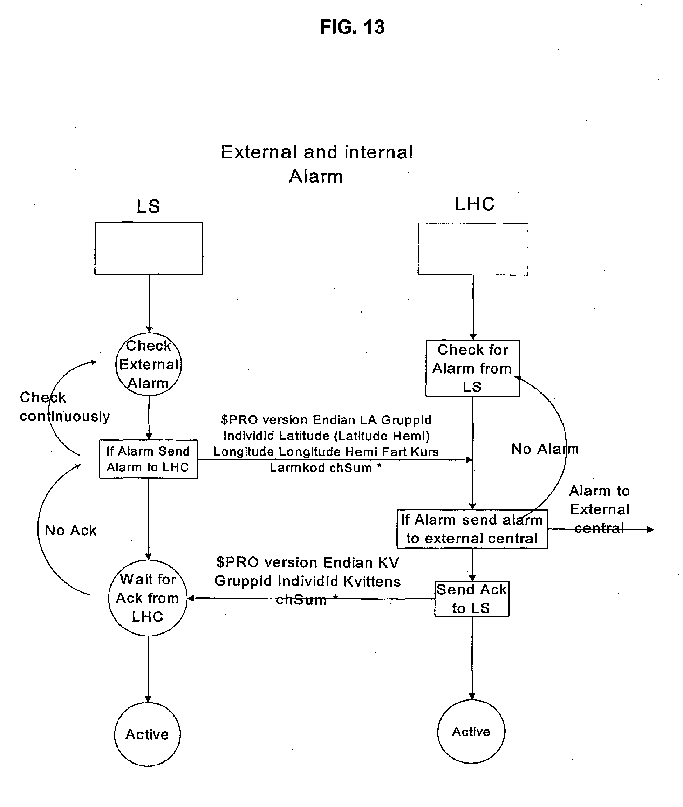

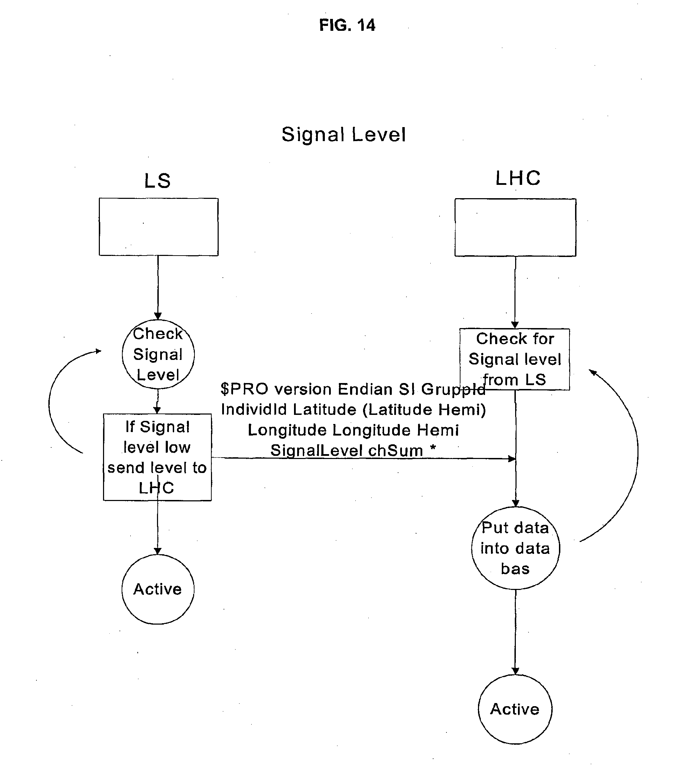

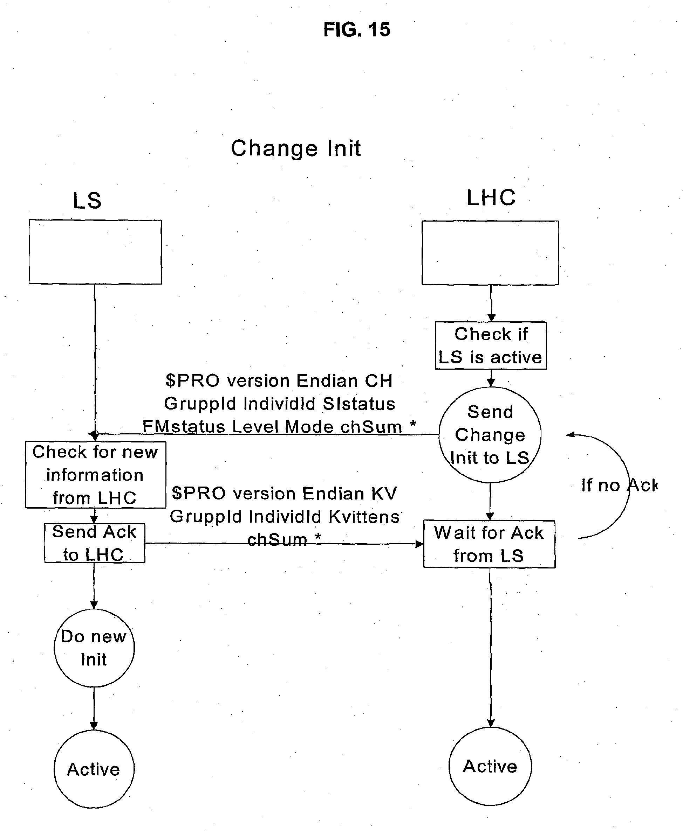

For data flow between the Mobile telephone alarm and the Communication server, please refer to:
Data flow Alive messages mode 1 between the Mobile telephone alarm and the Alarm handling centre on page 9, Figure 10
Data flow Alive messages mode 2 between the Mobile telephone alarm and the Alarm handling centre on page 10, Figure 11
Data flow Alive messages mode 3 between the Mobile telephone alarm and the Alarm handling centre on page 12, Figure 12
Data flow external and internal alarms between the Mobile telephone alarm and the Alarm handling centre"on page 13, Figure 13
Data flow Signal Level between the Mobile telephone alarm and the Alarm handling centre"on page 14, Figure 14
Data flow Alteration of initiation between the Mobile telephone alarm and the Alarm handling centre on page 16, Figure 15
Data flow logging in"on page 17, Figure 18.

### Picture/video server

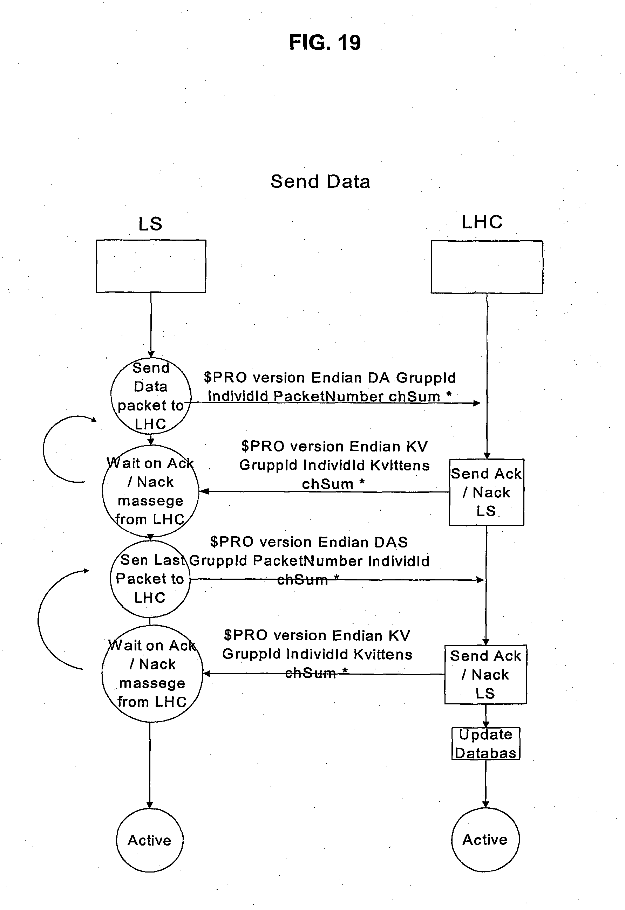

The task of the picture/video is to receive picture/video data from the Mobile telephone alarm. The data flow can be seen under the heading Data flow data transmission on page 18, Figure 19.

### Management / Database processing

The database processor can be used to add/remove clients from the system and to change their configuration data.

### Web server

Through the web server external customers can access data relating to their Mobile telephone alarms and see where the Mobile telephone alarms are via a digital map.

### Map server

The task of the map server is to show, via a digital map, where the Mobile telephone alarms are. By logging in, external customers shall be able to see where their Mobile telephone alarms are and if any of them has sent an alarm signal.

### Appendix A

**Abbreviations**
- BSC: Base Station Controller
- BTS: Base transceiver Station
- CM: Communication Management
- DMZ: De-Militarised Zone
- EDGE: Enhanced Data rate of GSM Evolution
- GPRS: General Packet Radio Service
- GGSN: Gateway GPRS Supported Node
- HLR: Home Location Register
- IP: Internet Protocol
- LS: Alarm transmitter (Mobile telephone alarm)
- LHC: Alarm Handling Centre
- MS: Mobile Station
- MMI: Man Machine Interface
- MMS: Multimedia Messaging Service
- MSC: Mobile Services Switching Centre
- PLMN: Public Land Mobile Network
- PSTN: Public Switched Telephone Network
- S M S: Short Message Service
- SGSN: Serving GPRS Support Node
- TTEN: Transparent Transfer to External Node
- TCP: Transport Control Protocol
- USSD: Unstructured Supplementary Service Data
- UMTS: Universal Mobile Telephone System (3G)
- VLR: Visiting Location Register

### Appendix B

Feasible data carriers for the Watchdog message are, for instance:
- SMS
- MMS
- GSM Data conversations
- Radio (e.g. Mobitex, DAB)
- GPRS
- EDGE
- UMTS
- USSD
- MPS

## Claims

1. A mobile communication arrangement comprising at least a mobile transmitting apparatus and a predetermined information unit; said mobile transmitting apparatus being adapted to transmit an information signal to the predetermined information unit, **characterized in that** the mobile transmission apparatus is adapted to operate in a first mode to continuously emit an information signal that is characteristic for the mobile transmitting apparatus and that the predetermined information unit is adapted to trigger an indication in the absence of the information signal, and a second mode to stop emitting said information signal and inform the predetermined information unit in case the velocity of said mobile transmitting apparatus exceeds a predetermined value.

2. Mobile communication arrangement according to claim 1, **characterized in that** said predetermined information unit is adapted to send a message in time intervals to the mobile transmitting apparatus operating in the second mode and having stopped to send the information signal, and that said mobile transmitting apparatus is adapted to send an acknowledgement message of the receipt of said message.

3. The arrangement according to claim 1 or 2, **characterized in that** the information signal is transmitted via a communication system and that a transmitting device is connected between the predetermined information unit and the communication system.

4. Arrangement according to claim 1, 2 or 3, **characterized in that** the information signal is a USSD signal.

5. Arrangement according to one of the claims 1 to 4, **characterized in that** the mobile transmitting apparatus is a mobile telephone.

6. Arrangement according to one of claims 1 to 5, **characterized in that** it comprises a plurality of further mobile transmitting apparatuses.

7. Arrangement as claimed in claim 1, **characterized in that** the information signal includes affiliation data and positional data from an positioning system.

8. Arrangement as claimed in claim 1, **characterized in that** the mobile transmitting apparatus comprises a unit that is adapted to generate a continuous information signal.

9. Arrangement as claimed in claim 8, **characterized in that** the unit of the mobile transmitting apparatus is adapted to produce positional data.

## Patentansprüche

1. Mobile Kommunikationsanordnung mit zumindest einem mobilen Sendegerät und einer vorgegebenen Informationseinheit, wobei das mobile Sendegerät ausgebildet ist, um ein Informationssignal an die vorgegebene Informationseinheit zu senden, **dadurch gekennzeichnet, dass** das mobile Sendegerät ausgebildet ist, um in einem ersten Modus zu arbeiten, um kontinuierlich ein Informationssignal abzugeben, das für das mobile Sendegerät charakteristisch ist, und dass die vorgegebene Informationseinheit ausgebildet ist, um bei Abwesenheit des Informationssignals eine Anzeige auszulösen, und in einem zweiten Modus, um die Abgabe des Informationssignals zu beenden und die vorgegebene Informationseinheit in einem Fall zu informieren, dass die Geschwindigkeit des mobilen Sendegerätes einen vorgegebenen Wert überschreitet.

2. Mobiles Kommunikationsgerät nach Anspruch 1, **dadurch gekennzeichnet dass** die vorgegebene Informationseinheit ausgebildet ist, eine Nachricht in Zeitintervallen an das mobile Sendegerät zu senden, das in dem zweiten Modus arbeitet und das Senden des Informationssignals beendet hat, und dass das mobile Sendegerät ausgebildet ist, um eine Bestätigungsnachricht des Empfangs der Nachricht zu senden.

3. Anordnung nach Anspruch 1 oder 2, **dadurch gekennzeichnet, dass** das Informationssignal über ein Kommunikationssystem übertragen wird und dass eine Transmittervorrichtung zwischen der vorgegebenen Informationseinheit und dem Kommunikationssystem verbunden ist.

4. Anordnung nach Anspruch 1, 2 oder 3, **dadurch gekennzeichnet, dass** das Informationssignal ein USSD-Signal ist.

5. Anordnung nach einem der Ansprüche 1 bis 4, **dadurch gekennzeichnet, dass** das mobile Sendegerät ein Mobiltelefon ist.

6. Anordnung nach einem der Ansprüche 1 bis 5, **dadurch gekennzeichnet, dass** sie eine Anzahl von weiteren mobilen Sendegeräten aufweist.

7. Anordnung nach Anspruch 1, **dadurch gekennzeichnet, dass** das Informationssignal Zugehörigkeitsdaten und Positionsdaten von einem Positionssystem aufweist.

8. Anordnung nach Anspruch 1, **dadurch gekennzeichnet, dass** das mobile Sendegerät eine Einheit aufweist, die ausgebildet ist, um ein kontinuierliches Informationssignal zu erzeugen.

9. Anordnung nach Anspruch 8, **dadurch gekennzeichnet, dass** die Einheit des mobilen Sendegerätes ausgebildet ist, um Positionsdaten zu erzeugen.

## Revendications

1. Agencement de communication mobile comprenant au moins un appareil de transmission mobile et une unité d'information prédéterminée ; ledit appareil de transmission mobile étant apte à transmettre un signal d'information à l'unité d'information prédéterminée, **caractérisé en ce que** l'appareil de transmission mobile est apte à fonctionner dans un premier mode en vue d'émettre en continu un signal d'information qui est caractéristique de l'appareil de transmission mobile et **en ce que** l'unité d'information prédéterminée est apte à déclencher une indication en l'absence du signal d'information, et dans un second mode en vue d'interrompre l'émission dudit signal d'information et d'informer l'unité d'information prédéterminée dans le cas où la vitesse dudit appareil de transmission mobile dépasse une valeur prédéterminée.

2. Agencement de communication mobile selon la revendication 1, **caractérisé en ce que** ladite unité d'information prédéterminée est apte à envoyer un message, au cours d'intervalles de temps, à l'appareil de transmission mobile fonctionnant dans le second mode et ayant interrompu l'envoi du signal d'information, et **en ce que** ledit appareil de transmission mobile est apte à envoyer un message d'accusé de réception concernant la réception dudit message.

3. Agencement selon la revendication 1 ou 2, **caractérisé en ce que** le signal d'information est transmis par le biais d'un système de communication et **en ce qu'**un dispositif de transmission est connecté entre l'unité d'information prédéterminée et le système de communication.

4. Agencement selon la revendication 1, 2 ou 3, **caractérisé en ce que** le signal d'information est un signal de données USSD.

5. Agencement selon l'une quelconque des revendications 1 à 4, **caractérisé en ce que** l'appareil de transmission mobile est un téléphone mobile.

6. Agencement selon l'une quelconque des revendications 1 à 5, **caractérisé en ce qu'**il comporte une pluralité d'appareils de transmission mobiles supplémentaires.

7. Agencement selon la revendication 1, **caractérisé en ce que** le signal d'information inclut des données d'affiliation et des données positionnelles en provenance d'un système de positionnement.

8. Agencement selon la revendication 1, **caractérisé en ce que** l'appareil de transmission mobile comprend une unité qui est apte à générer un signal d'information continu.

9. Agencement selon la revendication 8, **caractérisé en ce que** l'unité de l'appareil de transmission mobile est apte à produire des données positionnelles.
